# EUROPÄISCHE PATENTANMELDUNG

(11) **EP 3 187 468 A1**
(43) Veröffentlichungstag der Anmeldung: **05.07.2017**
(21) Anmeldenummer: 16205709.5
(22) Anmeldetag: 21.12.2016
(51) Int. Cl.: C03B 3/02, C03B 5/03, C03B 5/173

(54) **GLASSCHMELZANLAGE UND VERFAHREN ZUM BETREIBEN DERSELBEN**

(30) Priorität: 29.12.2015 DE 102015122912
(71) Anmelder: Beteiligungen Sorg GmbH & Co. KG, 97816 Lohr am Main (DE)
(72) Erfinder: MÜLLER, Volker, 96355 Tettau (DE); GRÖSSLER, Jürgen, 97753 Karlstadt (DE)
(74) Vertreter: Keil & Schaafhausen Patent- und Rechtsanwälte PartGmbB

(57) **Zusammenfassung**

Die Erfindung betrifft eine Glasschmelzanlage mit einer vollelektrisch beheizten Schmelzwanne (1) und einem mit der Schmelzwanne verbundenen Konditionierkanal (2). Um die Wiederverwertung von Nassabfall ohne Beeinträchtigung der Glasqualität zu ermöglichen, ist zusätzlich ein Nassabfall-Zuführungskanal (20) vorgesehen, welcher seitlich in den Konditionierkanal (2) mündet, zum Aufschmelzen von Nassabfall und zur Zuführung des geschmolzenen Nassabfalls zu der in dem Konditionierkanal (2) geführten Glasschmelze (10) dient. Es wird ferner ein entsprechendes Verfahren zum Betreiben einer Glasschmelzanlage angegeben.

## Beschreibung

Die vorliegende Erfindung betrifft eine vollelektrisch beheizte, zweihäusige Glasschmelzanlage mit einer Schmelzwanne und einem mit der Schmelzwanne über einen Durchlass verbundenen Konditionierkanal, welcher auch als Arbeitswanne bezeichnet wird. In der Schmelzwanne werden die festen Ausgangsstoffe mittels elektrisch betriebener Heizelemente nach und nach vollständig aufgeschmolzen. In dem Konditionierkanal wird die Glasschmelze, die dort keine festen Bestandteile mehr aufweist, kontrolliert auf eine Verarbeitungstemperatur eingestellt und schließlich über ein Auslaufsystem zur weiteren Verarbeitung entlassen. Der kanalförmige Durchlass verbindet die Schmelzwanne mit dem Konditionierkanal und weist häufig eine geringere Breite und/oder Höhe als die Schmelzwanne und/oder der Konditionierkanal auf.

Die Zugabe von Materialien zu einer Glasschmelzanlage erfolgt üblicherweise im Bereich der Schmelzwanne, z.B. über einen Einlegevorbau. Beispielsweise beschreibt die Druckschrift EP 1 093 442 B1, dass Gemenge umfassend Rohmaterialien an dem hinteren Bereich der Schmelzwanne, welcher einem Auslass für die Glasschmelze gegenüberliegt, seitlich über Zuführkanäle zugegeben wird. Weiter ist an der in diesem Bereich vorhandenen Stirnwand eine Öffnung vorgesehen, durch die Glasbruch und Glasscherben der Schmelzwanne zugeführt werden.

Bei der Faserglasherstellung für Mineralwollprodukte, insbesondere bei der Herstellung von C-Glas, fällt in der Produktion sogenannter Nassabfall an. Hierbei handelt es sich um Produktionsausschuss von Fasern, die bereits mit einer Schlichte auf organischer Basis beschichtet sind. Derartige Schlicht-Materialien sind beispielsweise Phenol-Formaldehydharz, polymere Polysäuren wie Polyacrylsäure mit Polyolen wie Ethylenglykol, Glycerin, Glukose etc. Die Schlicht-materialien sind teilweise thermisch schwer entfernbar und beeinflussen die Zusammensetzung einer Glasschmelze, wenn die Fasern dieser zugegeben werden. Hierdurch kann sich die Korrosionsrate des Ofens erhöhen.

Nassabfall liegt üblicherweise in der Form von Pellets vor, welche eine Restfeuchte von höchstens 30 Gew.% aufweisen können. Er wird derzeit entsorgt. Eine Entsorgung des Nassabfalls ist nachteilig, weil die Entsorgung mit Kosten verbunden ist und zudem das bereits erzeugte Glasmaterial verloren geht. Es besteht daher der Wunsch, diesen Nassabfall wieder dem Produktionsprozess zuzuführen.

Aus der Druckschrift US 4,432,780 A ist eine Glasschmelzanlage bekannt, bei der Faserglasabfall der Schmelzwanne mittels eines oxidierenden Gasstroms zugeführt wird. Dieser Gasstrom, beispielsweise Luft, transportiert die beschichteten Glasfasern in den Bereich heißer oxidierender Gase oberhalb der Glasschmelze, um mindestens einen Teil der Beschichtung der Oberfläche der Fasern zu oxidieren. Die Glasfasern liegen hierbei in zerkleinerter Form, beispielsweise einer Größe von 1¼ Zoll vor. Die Zuführungen für den mit den Fasern versehenen Gasstrom können nach der Offenbarung der Druckschrift US 4,432,780 A sowohl in der dem Abzug gegenüberliegenden Stirnwand, in den Seitenwänden als auch in der Stirnwand der Schmelzwanne angeordnet sein, welche an dem Ende des Auslasses der Schmelzwanne liegt. Dieses herkömmliche Verfahren zum Einbringen von Glasfasern hat jedoch den Nachteil, dass die Zusammensetzung der Glasschmelze in der Schmelzwanne in negativer Hinsicht verändert und die Korrosion der Wanne beschleunigt wird.

Aus der Druckschrift US 2002/000100 A1 geht hervor, dass der Faserabfall in einen elektrisch beheizten Schmelzofen zusammen mit dem Gemenge zugegeben werden kann. Weiter offenbart diese Druckschrift, dass das Faser-Abfallmaterial einem Bereich der Schmelzwanne über einem oberhalb der Schmelze angeordneten Kanal zugeführt wird, in dem die Temperatur der Schmelze mindestens 1000°C beträgt. Um zu erreichen, dass die Fasern das Schmelzbad tatsächlich erreichen, wird das Abfallmaterial außerdem mit Wasser befeuchtet. Auch dieses bekannte Verfahren bringt nicht die erwünschten Ergebnisse hinsichtlich der Qualität der Glasschmelze.

Die Aufgabe der vorliegenden Erfindung besteht somit darin, eine Glasschmelzanlage mit einer vollelektrisch beheizten Schmelzwanne zu schaffen, welche eine Wiederverwertung des Nassabfalls ermöglicht, wobei hierdurch die Glasherstellung nicht beeinträchtigt werden darf, insbesondere nicht hinsichtlich der Glasqualität. Entsprechend besteht die Aufgabe darin, ein einfaches und kostengünstiges Verfahren anzugeben, das die Wiederverwertung des Nassabfalls realisiert.

Die obige Aufgabe wird durch eine Glasschmelzanlage mit den Merkmalen des Anspruchs 1 gelöst.

Insbesondere ist bei der erfindungsgemäßen Glasschmelzanlage zusätzlich ein Nassabfall-Zuführungskanal vorgesehen, welcher seitlich in den Konditionierkanal mündet und welcher zum Aufschmelzen von Nassabfall und zur Zuführung des geschmolzenen Nassabfalls zu der in dem Konditionierkanal geführten Glasschmelze eingerichtet ist. Ferner ist erfindungsgemäß an dem dem Konditionierkanal gegenüber liegenden Ende des Nassabfall-Zuführungskanals eine Zuführungseinrichtung vorgesehen. Die Zuführungseinrichtung bevorratet den Nassabfall, beispielsweise in einem Vorratsbehälter, und führt den Nassabfall dem Nassabfall-Zuführungskanal zu. Dies bedeutet, dass durch die Zuführungseinrichtung eine Verbindung zwischen dem Vorratsbehälter und dem Nassabfall-Zuführungskanal hergestellt und der Nassabfall durch die Zuführungseinrichtung von dem Vorratsbehälter in den Nassabfall-Zuführungskanal transportiert wird.

Die Erfinder haben erkannt, dass insbesondere bei einer Schmelztechnologie, bei der in einem vertikal orientierten Schmelzprozess eine kalte Gemengedecke aus nicht geschmolzenem Material über einem vollelektrisch beheizten Schmelzfluss vorliegt, der Schmelzprozess durch Zugabe des Nassabfalls in der Schmelzwanne erheblich gestört wird. Für einen optimalen Schmelzprozess muss die Schmelzwanne an der Beschickungsoberfläche vollständig bedeckt sein, da die Bedeckung vor direktem Wärmestrahlungsverlust der Glasschmelze schützt. Würde der Nassabfall direkt in der Schmelzwanne zugegeben werden, würde diese Bedeckung aufreißen und der Wärmehaushalt der Schmelzwanne gestört werden. Das Aufreißen der Bedeckung bewirkt eine direkte, ungehinderte Wärmeabstrahlung nach oben, so dass die Temperaturen in der Schmelzanlage fallen. Dies muss durch eine Erhöhung der Energiezufuhr kompensiert werden. Der Schmelzprozess wird somit thermisch instabil, was auch die Strömungsverhältnisse in der Wanne negativ beeinflusst. Folglich würde sich die Qualität der Schmelze, die das Schmelzaggregat verlässt, verschlechtern.

Ausgehend von dieser Erkenntnis sind die Erfinder zu dem Ergebnis gelangt, dass - anders als im Stand der Technik - die Zugabe des Nassabfalls im Konditionierkanal erfolgen muss, in dem der Wärmehaushalt unabhängig von der Gemengebedeckung ist, da in dem Konditionierkanal keine Gemengebedeckung erforderlich ist. Die Erfinder haben weiter herausgefunden, dass es notwendig ist, den Nassabfall vor der Zuführung in einem seitlich in den Konditionierkanal mündenden Nassabfall-Zuführungskanal vollständig aufzuschmelzen, um die in dem Konditionierkanal geführte Glasschmelze möglichst wenig thermisch zu beeinflussen. Durch das Aufschmelzen des Nassabfalls erfolgt außerdem eine thermische Konditionierung des aufgeschmolzenen Nassabfalls dahingehend, dass der Materialzustrom aus dem Nassabfall-Zuführungskanal eine möglichst geringe Temperaturdifferenz zu dem Hauptstrom des Konditionierkanals aufweist.

Andernfalls, wenn die Temperaturdifferenz zwischen der Temperatur des den Nassabfall-Zuführungskanal verlassenden geschmolzenen Nassabfall und der Temperatur der in dem Konditionierkanal an dieser Stelle fließenden Glasschmelze zu groß ist, erhöht sich der für die Angleichung der Temperatur im Konditionierkanal erforderliche Energieaufwand beträchtlich. Bei einer Durchsatzleistung der Schmelzanlage von 100 t/Tag und 5 % Faserabfallzugabe mit einer Feuchte von 30 % müsste man beispielsweise im Konditionierkanal eine Energiemenge in der Höhe von 650 kW zusätzlich einbringen.

Zudem wird durch das Aufschmelzen des Nassabfalls vor der Zuführung in den Konditionierkanal erreicht, dass die organischen Bestandteile des Nassabfalls von der Schlichte als Abgas entweichen und somit nicht in den in dem Konditionierkanal fließenden Glasstrom gelangen.

Als Nassabfall wird im Zusammenhang der vorliegenden Erfindung Produktionsabfall an Glasfasern angesehen, wobei die Glasfasern auf ihrer Oberfläche eine Schlichte (Beschichtung), zumindest teilweise enthaltend eine organische Verbindung, aufweisen können. Der Nassabfall kann ferner Restfeuchte von höchstens 30 Gew.% aufweisen. Vorzugsweise liegt der Nassabfall in Form von Pellets vor. Die Fasern haben vorzugsweise eine Länge im Bereich von 10 mm bis 100 mm.

Der Nassabfall-Zuführungskanal kann elektrisch mittels in der Nassabfall-Schmelze angeordneter Elektroden und/oder atmosphärisch mittels eines Brenners mit gasförmigem Brennstoff beheizt werden.

In einem bevorzugten Ausführungsbeispiel weist der Nassabfall-Zuführungskanal einen Abzug auf, durch welchen das in dem Nassabfall-Zuführungskanal beim Aufschmelzen des Nassabfalls entstehende Abgas einer Abgasreinigungsanlage zugeführt wird. Dieses Abziehen des Abgases ist notwendig, da beim Aufschmelzen der Nassabfälle Wasserdampf und organische Verbindungen, die gasförmig sind, freigesetzt werden. Dieses soll nicht in den Konditionierkanal gelangen, da es die Ausmauerung des Konditionierkanals zu stark angreift.

Aus gleichem Grund ist auch in einer bevorzugten Ausführungsform der Erfindung der Nassabfall-Zuführungskanal gegenüber der Umgebung und dem Konditionierkanal gasdicht abgeschlossen.

Weiter ist bevorzugt, dass der Ofendruck in dem Verbrennungsraum über der Glasschmelze im Konditionierkanal durch eine Absaugpumpe kontrolliert wird, welche sich in Richtung der Abgasströmung hinter der Abgasreinigungsanlage befindet.

Weiter ist von Vorteil, dass in einer bevorzugten Ausführungsform der vorliegenden Erfindung an dem konditionierkanalseitigen Ende des Nassabfall-Zuführungskanals ein vorzugsweise quaderförmiger Skimmer vorgesehen ist. Mittels des Skimmers, der vorzugsweise mindestens 10 mm, vorzugsweise 15 mm bis 20 mm, in die Nassabfall-Schmelze des Zuführungskanals hineinragt, wird verhindert, dass Oberflächenglas direkt in den Konditionierkanal eintritt. Ferner kann Schaum, der beim Aufschmelzen des Nassabfalls gebildet wird, vom Eintreten in den Konditionierkanal zurückgehalten werden. Der Skimmer erstreckt sich vorzugsweise über die gesamte Breite des Nassabfall-Zuführungskanals. Ferner ragt dieser über eine innere Kante, welche den Konditionierkanal und den Nassabfall-Zuführungskanal nach oben abschließt, hinaus.

Die erfindungsgemäße dosierte Zugabe des Nassabfalls erfolgt an dem dem Konditionierkanal gegenüber liegenden Ende des Nassabfall-Zuführungskanals durch die Zuführungseinrichtung (Einleger), durch die vorzugsweise verkleinerter Nassabfall dem Nassabfall-Zuführungskanal zugegeben wird. Besonders bevorzugt weist die Zuführungseinrichtung eine Fördereinrichtung sowie einen Vorratsbehälter mit dem Nassabfall auf, der beispielsweise als Dosier- oder Vorratstrichter ausgebildet ist. Der Vorratsbehälter weist eine Aufgabeöffnung zum Zugeben des Nassabfalls von außen und eine Abgabeöffnung am gegenüberliegenden Ende des Vorratsbehälters auf, durch welche Nassabfall der Fördereinrichtung für den Transport zum Nassabfall-Zuführungskanal übergeben wird.

Die obige Aufgabe wird ferner durch das in Anspruch 7 angegebene Verfahren zum Betreiben einer Glasschmelzanlage gelöst. Das erfindungsgemäße Verfahren besitzt die gleichen Vorteile wie die erfindungsgemäße Glasschmelzanlage.

Erfindungsgemäß wird Nassabfall in einem Nassabfall-Zuführungskanal aufgeschmolzen und der in dem Konditionierkanal geführten Glasschmelze seitlich, d.h. quer zur Fließrichtung der Glasschmelze, durch diesen Nassabfall-Zuführungskanal zugeführt. Dieses Verfahren ist besonders einfach und führt dazu, dass Nassabfälle nun wiederverwertet werden können.

Wie oben bereits erläutert wurde, ist es von besonderem Vorteil, dass die in dem Nassabfall-Zuführungskanal durch das Aufschmelzen des Nassabfalls entstehenden Abgase durch einen Abzug einer Abgasreinigungsanlage zugeführt werden.

Es ist ferner von Vorteil, wenn der vorzugsweise zerkleinerte Nassabfall mittels einer Zuführungseinrichtung dem Nassabfall-Zuführungskanal an dem dem Konditionierkanal gegenüber liegenden Ende zugegeben wird.

Die Schmelzbadtiefe im Nassabfall-Zuführungskanal beträgt vorzugsweise mindestens 80 mm, besonders bevorzugt 100 mm bis 250 mm.

Die Erfindung wird nachfolgend anhand von Ausführungsbeispielen näher erläutert, welche in den Figuren dargestellt sind. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen schematisch:
- Fig. 1: ein Ausführungsbeispiel einer erfindungsgemäßen Glasschmelzanlage in einer Ansicht von der Seite,
- Fig. 2: einen Nassabfall-Zuführungskanal der Glasschmelzanlage gemäß Fig. 1 in einer Ansicht von der Seite,
- Fig. 3: den Nassabfall-Zuführungskanal gemäß Fig. 2 in einer Ansicht von oben und
- Fig. 4: die erfindungsgemäße Glasschmelzanlage gemäß Fig. 1 in einer Ansicht von oben.

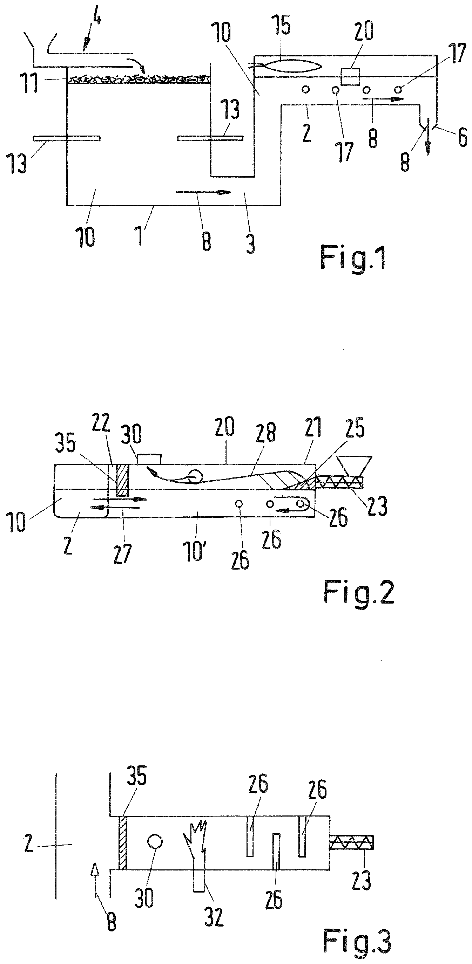

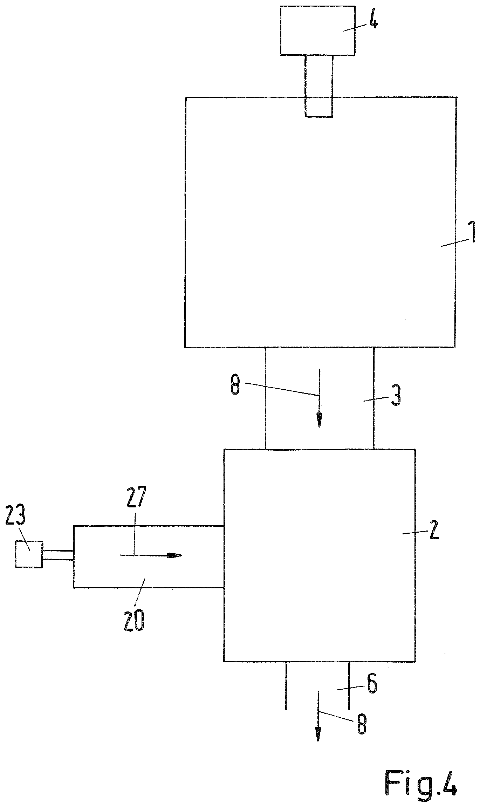

Fig. 1 und 4 zeigen eine erfindungsgemäße Glasschmelzanlage mit einer Schmelzwanne 1 und einem Konditionierkanal 2, welcher über einen Durchlass 3 mit der Schmelzwanne 1 verbunden ist. In der Schmelzwanne 1 wird das Rohstoffgemenge, d.h. die Ausgangsstoffe der Glasschmelze, über die Zuführung 4 in die Schmelzwanne 1 eingelegt. Das Rohstoffgemenge kann in herkömmlicher Weise primäre Rohstoffe und ggf. auch Glasscherben aufweisen.

Es bildet in dem nicht aufgeschmolzenen Zustand auf der Oberfläche der Glasschmelze 10 in der Schmelzwanne 1 eine Gemengebedeckung 11. Hierbei ist in der Schmelzwanne 1 die Beschickungsoberfläche meist vollständig durch die Gemengebedeckung 11 bedeckt, insbesondere in dem hier dargestellten Fall, in dem die Beheizung der Schmelzwanne 1 in bekannter Weise elektrisch mittels Schmelzelektroden 13, die seitlich in die Schmelzwanne 1 hineinragen, erfolgt.

Nach dem Schmelzen in der Schmelzwanne 1 passiert die Glasschmelze 10 in Fließrichtung (siehe Pfeile 8) den Durchlass 3 und gelangt in den Konditionierkanal 2, wo eine kontrollierte Einstellung der Verarbeitungstemperatur der Glasschmelze 10 mittels in der Seitenwand des Konditionierkanals 2 angeordneter Elektroden 17 und/oder einem Brenner 15 erfolgt, der zur Verbrennung gasförmiger Brennstoffe wie Erdgas eingerichtet ist. Der Brenner 15 ist vorzugsweise in der Stirnwand des Konditionierkanals 2 angeordnet, in die der Durchlass 3 mündet. Die Glasschmelze 10 tritt schließlich über einen Ausfluss 6 zur weiteren Verarbeitung aus dem Konditionierkanal 2 aus.

Der Konditionierkanal 2 ist ferner mit einem Nassabfall-Zuführungskanal 20 verbunden, welcher in den Fig. 2 und 3 im Detail dargestellt ist. Der Nassabfall-Zuführungskanal 20 mündet in eine Seitenwand des Konditionierkanals 2, quer zur Fließrichtung (siehe Pfeile 8) der Glasschmelze 10.

In dem Nassabfall-Zuführungskanal 20 wird der Nassabfall aufgeschmolzen, so dass eine Nassabfall-Schmelze 10' entsteht. Der Nassabfall wird an dem dem Konditionierkanal 2 gegenüber liegenden Ende 21 des Nassabfall-Zuführungskanals 20 mittels einer Zuführungseinrichtung 23 eingelegt, welche auch eine Fördereinrichtung aufweist (z.B. einen Schraubeneinleger). Die Fördereinrichtung kann hierbei derart gestaltet sein, dass sie eine Einstellung der Fördermenge erlaubt. Ferner ist ein Vorratsbehälter enthaltend den vorzugsweise zerkleinerten Nassabfall vorgesehen. Der Nassabfall wird von dem Vorratsbehälter mittels der Fördereinrichtung zum Nassabfall-Zuführungskanal 20 transportiert. Das zugegebene, nicht geschmolzene Nassabfall-Gemenge bedeckt im Bereich 25 die Oberfläche der Nassabfall-Schmelze 10'.

Die Beheizung des Nassabfall-Zuführungskanals 20 erfolgt mittels Elektroden 26, welche seitlich, d.h. quer zur Strömungsrichtung 27 der Nassabfall-Schmelze 10' in den Nassabfall-Zuführungskanal 20 hineinragen. Die Elektroden 26 sind an dem dem Konditionierkanal 2 gegenüber liegenden Ende 21 des Nassabfall-Zuführungskanals 20 angeordnet.

Der Nassabfall-Zuführungskanal 20 wird weiter zum Schmelzen des Nassabfalls mittels eines Brenners 32 beheizt, welcher gasförmigen Brennstoff quer zur Richtung der Strömung (siehe Pfeil 27) der Nassabfall-Schmelze 10' in den Nassabfall-Zuführungskanal 20 einleitet.

Während des Aufheizens des Nassabfalls entstehen Abgase, welche insbesondere durch Verbrennen der Schlichte/Beschichtung der Fasern auf organischer Basis entstehen. Die Abgase strömen in eine mit Pfeilen 28 gekennzeichnete Richtung und entweichen über einen Abzug 30. Der Abzug 30 ist im Bereich des konditionierkanalseitigen Endes 22 des Nassabfall-Zuführungskanals 20 angeordnet.

Auch gegenüber der Umgebung ist der Verbrennungsraum des Nassabfall-Zuführungskanals 20 gasdicht abgeschlossen, die Abgase werden über den Abzug 30 in eine Abgasreinigungsanlage (nicht dargestellt) eingeleitet. Das Abgas des Nassabfall-Zuführungskanals 20 ist mit Schadstoffen und Staub belastet, welche durch die Abgasreinigungsanlage herausgefiltert werden. Der Druck in dem Nassabfall-Zuführungskanal 20 über der Nassabfall-Schmelze 10' bzw. in dem Konditionierkanal 2 über der Glasschmelze 10 wird durch einen nicht dargestellten Saugzug kontrolliert, der sich üblicherweise in Richtung der Strömung des Abgases (Pfeile 28) hinter der Abgasreinigungsanlage befindet.

Der Nassabfall-Zuführungskanal 20 weist ferner an seinem konditionierkanalseitigen Ende 22 einen Skimmer 35 auf, der den Nassabfall-Zuführungskanal 20 gasdicht von dem Konditionierkanal 2 abschließt. Der Skimmer 35, welcher die Form eines Blockes besitzt, verhindert, dass Oberflächenglas der Nassabfall-Schmelze 10' direkt in den Konditionierkanal 2 eintritt. Mit dem Skimmer 35 kann zudem Schaum, der sich beim Aufschmelzen des Nassabfalls bildet, von der in dem Konditionierkanal 2 fließenden Glasschmelze 10 zurückgehalten werden.

Der Skimmer 35 besteht aus korrosionsfestem, feuerfestem Material, welches auch für den direkten Kontakt mit der Nassabfall-Schmelze 10' geeignet ist. Der Block ragt gemessen von der Oberfläche der Nassabfall-Schmelze 10' mindestens 10 mm, vorzugsweise 15 mm bis 20 mm, in diese Schmelze hinein. Die Schmelzbadtiefe im Konditionierkanal 2 und im Nassabfall-Zuführungskanal beträgt vorzugsweise mindestens 80 mm, besonders bevorzugt 100 mm bis 250 mm. Der Skimmer 35 ragt über die innere Kante des Gewölbes hinaus, welches den Konditionierkanal 2 und auch den Nassabfall-Zuführungskanal 20 nach oben abschließt, so dass der Skimmerblock die beiden Gasräume von Zuführungskanal und Konditionierkanal vollständig trennt. Die beiden Gasraumabdeckungen stoßen an diesen Skimmerblock an. Es kann dadurch kein Spalt zwischen den getrennten Gasräumen entstehen, der einen Austausch der jeweiligen, in den Gasräumen vorhandenen Atmosphären zuließe.

Die erfindungsgemäße Glasschmelzanlage bzw. das erfindungsgemäße Verfahren erlaubt eine einfache und kostengünstige Verwertung des Nassabfalls, ohne die Glasqualität nennenswert negativ zu beeinflussen.

### Bezugszeichenliste:

- 1: Schmelzwanne
- 2: Konditionierkanal
- 3: Durchlass
- 4: Zuführeinrichtung
- 6: Ausfluss
- 8: Strömungsrichtung der Glasschmelze 10
- 10: Glasschmelze
- 10': Nassabfall-Schmelze
- 11: Gemengebedeckung
- 13: Elektrode
- 15: Brenner
- 17: Elektrode
- 20: Nassabfall-Zuführungskanal
- 21: dem Konditionierkanal gegenüber liegendes Ende des Nassabfall-Zuführungskanals 20
- 22: konditionierkanalseitiges Ende des Nassabfall-Zuführungskanals 20
- 23: Zuführungseinrichtung
- 25: Bereich
- 26: Elektrode
- 27: Fließrichtung der Nassabfall-Schmelze
- 28: Richtung der Abgasströmung
- 30: Abzug
- 32: Brenner
- 35: Skimmer

## Patentansprüche

1. Glasschmelzanlage mit einer vollelektrisch beheizten Schmelzwanne (1) und einem mit der Schmelzwanne verbundenen Konditionierkanal (2), **dadurch gekennzeichnet, dass** zusätzlich ein Nassabfall-Zuführungskanal (20) vorgesehen ist, welcher seitlich in den Konditionierkanal (2) mündet und zum Aufschmelzen von Nassabfall und zur Zuführung des geschmolzenen Nassabfalls zu der in dem Konditionierkanal (2) geführten Glasschmelze (10) eingerichtet ist, wobei an dem dem Konditionierkanal (2) gegenüber liegenden Ende (21) des Nassabfall-Zuführungskanals (20) eine Zuführungseinrichtung (23) vorgesehen ist, wobei die Zuführungseinrichtung (23) den Nassabfall bevorratet und dem Nassabfall-Zuführungskanal (20) zuführt.

2. Glasschmelzanlage nach Anspruch 1, **dadurch gekennzeichnet, dass** der Nassabfall-Zuführungskanal (20) einen Abzug (30) aufweist, durch welchen die in dem Nassabfall-Zuführungskanal (20) beim Aufschmelzen des Nassabfalls entstehenden Abgase einer Abgasreinigungsanlage zugeführt werden.

3. Glasschmelzanlage nach Anspruch 1, **dadurch gekennzeichnet, dass** der Nassabfall-Zuführungskanal (20) gegenüber der Umgebung und dem Konditionierkanal (2) gasdicht abgeschlossen ist.

4. Glasschmelzanlage nach einem der vorhergehenden Ansprüche, **dadurch gekennzeichnet, dass** an dem konditionierkanalseitigen Ende (22) des Nassabfall-Zuführungskanals (20) ein Skimmer (35) vorgesehen ist.

5. Glasschmelzanlage nach einem der vorhergehenden Ansprüche, **dadurch gekennzeichnet, dass** die Zuführungseinrichtung (23) dem Nassabfall-Zuführungskanal (20) zerkleinerten Nassabfall zuführt.

6. Glasschmelzanlage nach einem der vorhergehenden Ansprüche, **dadurch gekennzeichnet, dass** der Skimmer (35) mindestens 10 mm in die Nassabfall-Schmelze (10') hineinragt.

7. Verfahren zum Betreiben einer Glasschmelzanlage mit einer vollelektrisch beheizten Schmelzwanne (1) und einem damit verbundenen Konditionierkanal (2), **dadurch gekennzeichnet, dass** Nassabfall in einem Nassabfall-Zuführungskanal (20) aufgeschmolzen wird und der geschmolzene Nassabfall der in dem Konditionierkanal (2) geführten Glasschmelze (10) seitlich durch den Nassabfall-Zuführungskanal (20) zugeführt wird.

8. Verfahren nach Anspruch 7, **dadurch gekennzeichnet, dass** die in dem Nassabfall-Zuführungskanal (20) durch Aufschmelzen des Nassabfalls entstehenden Abgase durch einen Abzug (30) einer Abgasreinigungsanlage zugeführt werden.

9. Verfahren nach einem der Ansprüche 7 bis 8, **dadurch gekennzeichnet, dass** der vorzugsweise zerkleinerte Nassabfall mittels einer Zuführungseinrichtung (23) dem Nassabfall-Zuführungskanal (20) an dem dem Konditionierkanal (2) gegenüber liegenden Ende (21) des Nassabfall-Zuführungskanals (2) zugegeben wird.
